# EUROPÄISCHE PATENTSCHRIFT

(11) **EP 0 806 187 B1**
(45) Veröffentlichungstag und Bekanntmachung des Hinweises auf die Patenterteilung: **22.01.2003**
(21) Anmeldenummer: 97105034.9
(22) Anmeldetag: 25.03.1997
(51) Int. Cl.: A61C 5/06, B05C 17/01, A61C 9/00

(54) **Applikator**
Applicator
Applicateur

(30) Priorität: 08.05.1996 DE 19618544
(43) Veröffentlichungstag der Anmeldung: 12.11.1997
(73) Patentinhaber: Ivoclar Vivadent AG, 9494 Schaan (LI)
(72) Erfinder: Kunkel, Peter, 9494 Schaan (LI); Mertins, Jürgen, 9473 Gams (CH)
(74) Vertreter: Baronetzky, Klaus, Dipl.-Ing.

(56) Entgegenhaltungen:
- DE-A- 3 607 384
- FR-A- 2 529 930
- US-A- 4 681 524
- US-A- 5 192 008

## Beschreibung

Die Erfindung betrifft einen Applikator gemäß dem Oberbegriff von Anspruch 1.

Aus der FR-A2-2 529 930 ist ein Kitt-Applikator bekannt, der einen Kipphebel aufweist und dessen Handgriff sich im wesentlichen lotrecht von der Ausdrückrichtung des Applikators weg erstreckt.

Ein weiterer derartiger Applikator für hochviskose Massen, insbesondere für Zahnfüllmaterial, ist beispielsweise aus der DE-OS-36 07 384 bekannt. Dieser Applikator weist einen Pistolengriff mit einem Drücker auf, der über eine Antriebsmechanik bei jeder Betätigung Zahnfüllmaterial abgibt. Wenn die Patrone mit Zahnfüllmaterial leer ist, kann eine Kolbenstange über eine Freigabestange gelöst und zurückgeschoben werden, so daß eine neue, gefüllte Patrone einsetzbar ist.

Zahnfüllmaterialien müssen in der Regel exakt dosiert werden, so daß es wünschenswert ist, daß die bei der Betätigung des Drückers abgegebene Masse konstant ist. Insbesondere soll nach der Betätigung kein weiteres Ausfließen der pastösen und ziemlich hochviskosen Masse wie des Zahnfüllmaterials erfolgen, zumal dies häufig mit Verunreinigungen verbunden ist. Bei der aus der DE-OS-36 07 384 bekannten Lösung ist es zum Vermeiden der Nachpressung vorgesehen, daß bei Betätigung des Drückers oder Betätigungselements anschließend an den Austreibvorgang eine Entlastung der Kolbenstange über einen speziellen Entlastungshebel, der einstückig mit dem Betätigungshebel verbunden ist und auf ein Sperr-Verkantungselement wirkt, vorgenommen wird.

Nachteilig ist bei dieser Lösung, daß eine Entlastung nur dann vorgenommen wird, wenn der Drücker vollständig eingedrückt wird. Andererseits neigt die Bedienperson nach dem erfolgten Ausdrücken in dem gewünschten Maße dazu, nicht noch weitere Kraft aufzubringen, um den Drücker vollständig einzudrücken, zumal der gewünschte Erfolg bereits erzielt erscheint. Daher ist es bei dieser Lösung nicht sichergestellt, daß ein Nachpressen vermieden wird.

Demgegenüber liegt der Erfindung die Aufgabe zugrunde, einen Applikator gemäß dem Oberbegriff von Anspruch 1 zu schaffen, der ein Nachpressen der zu applizierenden Masse sicher vermeidet.

Diese Aufgabe wird erfindungsgemäß durch Anspruch 1 gelöst. Vorteilhafte Weiterbildungen ergeben sich aus den Unteransprüchen.

Besonders günstig bei dem erfindungsgemäßen Applikator oder der erfindungsgemäßen Ausdrückvorrichtung ist die automatische Rückstellung in eine Entlastungsstellung für die auszudrückende viskose Masse, und zwar unabhängig davon, ob das Betätigungselement ganz oder teilweise über seinen Betätigungsweg bewegt wird. In diesem Zusammenhang ist es besonders vorteilhaft, daß die Freigabe durch die erfindungsgemäße Koppelstange beim Lösen des Betätigungselements erfolgt.

Aufgrund der Hebelwirkung des Betätigungselements- oder Hebels wird eine Kraftübersetzung von beispielsweise 5:1 erzeugt, so daß die Ausdrückkraft beispielsweise fünf mal größer als die Betätigungskraft des Betätigungshebels ist. Die Ausdrückkraft wird von der Kolbenstange, den Verkantungselementen und dem Gehäuse aufgenommen, die je eine gewisse Elastizität aufweisen, so daß sich ein geringer Rückfederweg beim Lösen der Betätigungskraft ergibt. Auch dieser wird erfindungsgemäß sicher berücksichtigt, so daß die in dem Applikator eingesetzte Patrone oder eine über einen Adapter eingesetzte Kartusche vorspannungsfrei verbleibt, wenn das Betätigungselement sich in der Ruhestellung befindet. Erfindungsgemäß ist es demnach vorgesehen, daß auch die gewisse Elastizität der Arbeitselemente bei der Betätigung unkritisch ist.

Gemäß einer ersten Ausführungsform ist die Kolbenstange in der Ruhestellung des Betätigungselements frei beweglich. Sie kann demnach zum Beladen mit einer neuen Patrone ohne weiteres von Hand zurückgezogen werden. Bei dieser Ausführungsform ist die Länge der Koppelstange so bemessen, daß sie in Ruhestellung des Betätigungselements unter Druck steht und das Sperr-Verkantungselement freigibt. Erst beim Lösen des Betätigungselements nach der Bewegung in die Arbeitsstellung greift das Sperr-Verkantungselement, jedoch nur über einen Teil der Bewegung des Betätigungselements in Gegenrichtung zur Arbeitsrichtung, so daß während des verbleibenden Teils der Bewegung des Betätigungselements das Sperr-Verkantungselement nicht greift und aufgrund der Reibung zwischen dem Verkantungselement und dem Betätigungselement eine kleine Rückwärtsbewegung der Kolbenstange, also eine Bewegung in Rückwärtsrichtung erfolgt.

Bei einer zweiten Ausführungsform der Erfindung ist demgegenüber vorgesehen, daß die Länge der Koppelstange so ausgelegt ist, daß das Sperr-Verkantungselement in der Ruhestellung des Betätigungselements noch greift, also gegen die Kolbenstange verkantet. Auch bei dieser Ausführungsform läßt sich durch eine geeignete Einstellung ein sicheres Entlasten und gegebenenfalls auch eine kleine Bewegung der Kolbenstange in Rückwärtsrichtung sicherstellen. Zum vollständigen Bewegen der Kolbenstange in Rückwärtsrichtung - zum Austauschen der Patrone oder der Kartusche - ist es bei dieser Lösung vorgesehen, daß das Betätigungselement über die Ruhestellung hinaus in eine Lösestellung bewegbar ist, in welcher es auf die Kolbenstange wirkt, so daß diese das Sperr-Verkantungselement entgegen seiner Federbelastung in eine Freigabeposition bringt, in welcher die Kolbenstange freigegeben ist.

Gemäß einer weiteren bevorzugten Ausgestaltung ist eine Stellvorrichtung vorgesehen, mit welcher der über die Koppelstange eingestellte Abstand zwischen einer entsprechenden Fläche des Betätigungselements und dem Sperr-Verkantungselement einstellbar ist. Die Stellvorrichtung kann in beliebiger geeigneter Weise ausgebildet sein, beispielsweise als auf die Koppelstange aufgebrachte, von außen verstellbare Rändelmutter, oder als verschiebbare Lagerstelle des Sperr-Verkantungselements an dem Gehäuse. Es ist auch möglich, mit einer weiteren Ausgestaltung des erfindungsgemäßen Applikators je nach Stellung der Stellvorrichtung eine Gegenbewegung der Kolbenstange in Rückwärtsrichtung kurz vor Erreichen der Ruhestellung des Betätigungselements einzuleiten oder eine reine Entlastung der Patrone oder Kartusche mit der hochviskosen Masse sicherzustellen.

Es ist bevorzugt, daß der erfindungsgemäße Applikator die Patrone oder Kartusche mit der hochviskosen Masse in einer Mehrzahl von Hüben ausdrückt. Wenn eine Kartusche mit lichthärtendem Material über einen entsprechenden Adapter verwendet wird, kann es beispielsweise vorgesehen sein, daß die Kolbenstange mit etwa drei bis zwanzig Hüben, bevorzugt fünf bis zwölf und insbesondere etwa acht oder neun Hüben die Kartusche ausdrückt, so daß der Hub der Kolbenstange bei jeder vollständigen Bewegung des Betätigungselements und einer angenommenen Füllänge der Kartusche von 1,5 cm 0,8 bis 5 mm und insbesondere etwa 1,9 mm beträgt. Es versteht sich jedoch, daß die Anzahl der möglichen Hübe bei vollständiger Bewegung der Kolbenstange von einem Ende zum anderen in weiten Bereichen an die Erfordernisse anpaßbar ist. Beispielsweise kann die Kolbenstange auch einen erheblich vergrößerten Bewegungsweg von beispielsweise auch 10 cm aufweisen, wenn eine entsprechend große Patrone bedient werden soll.

Auch das Übersetzungsverhältnis des als Betätigungselement verwendeten Hebels läßt sich in weiten Bereichen an die Erfordernisse anpassen. Bei einem Hub von 4 mm kann es beispielsweise vorgesehen sein, daß das freie Ende des Betätigungshebels um etwa 4 cm bewegt werden muß, so daß insofern ein Bewegungs-Untersetzungs- bzw. ein Kraft-Übersetzungs-Verhältnis von 1:10 bzw. 10:1 vorliegt.

Die erfindungsgemäße Lösung ermöglicht trotz dieses guten Übersetzungsverhältnisses eine relativ kompakte und vor allem ergonomische Bauweise. Die schrägstehende Ruhestellung des Betätigungshebels, der in Vorwärtsrichtung der Kolbenstange weist und sich zum Gehäuse hin verschwenken läßt, um einen Arbeitshub, also eine Bewegung der Kolbenstange in Vorwärtsrichtung zu erzeugen, ermöglicht es beispielsweise, das vordere Ende des Gehäuses oder gegebenenfalls die Patronenhülse oder den Adapter mit zwei oder drei Fingern zu umgreifen, während der Daumen in Rückwärtsrichtung der Kolbenstange weist und das Gehäuse an einer geeigneten Stelle gegenstützt, und dann beispielsweise mit dem Zeige- oder Mittelfinger das Betätigungselement in dem gewünschten Ausmaß zu betätigen. Diese Greifposition ermöglicht eine ruhige Handhabung ohne große Bewegung des Austrittsendes in Folge der Betätigung des Betätigungshebels. Überraschend ist die Betätigung bei dieser Greifposition noch konstanter und wackelsicherer als bei Verwendung einer Ausdrückvorrichtung mit Pistolengriff, wie sie an sich bekannt geworden ist, obwohl der erfindungsgemäße Applikator erheblich kleiner baut und auch ein geringeres Gewicht aufweist, so daß ein ermüdungsarmes Arbeiten möglich ist.

Anstelle dieser Greifposition ist es auch möglich, das Gehäuse mit vier Fingern zu umgreifen und den Daumen auf die Spitze oder das freie Ende des Betätigungshebels wirken zu lassen. Auch diese Position ermöglicht eine ziemlich ruhige Bedienung des erfindungsgemäßen Applikators, und zwar sowohl, wenn der Applikator mit seiner Austreiböffnung nach oben, als auch wenn er nach unten aus der geschlossenen Hand herausragt.

Erfindungsgemäß besonders günstig ist es, daß die in einer Patronenhülse aufgenommene Patrone oder der Adapter zur Aufnahme der Kartusche über eine Rastvorrichtung wie einen Bajonettverschluß mit dem Gehäuse verbunden ist und dieses verlängert. Dann weist der gesamte Applikator im wesentlichen den Aufbau eines Stiftes auf, und die noch verbleibende Reserve der Patrone oder der Kartusche ist über eine Markierung gut ablesbar, die sich an dem hinteren Ende der Kolbenstange befindet, das sich nach hinten aus dem Gehäuse heraus erstreckt.

Der Adapter kann bei Bedarf mit einer ziemlich weichen Rückholfeder versehen sein, die in Richtung der Entlastung der Patrone wirkt und bei Betätigung des Betätigungselements in die Lösestellung dazu führt, daß die Kolbenstange automatisch in ihre Ausgangsposition zurückgeschoben wird, so daß eine neue Kartusche einsetzbar ist. Diese Kraft der Rückholfeder ist bevorzugt jedoch so gering, daß sie nicht ausreicht, die Kolbenstange bei Ruhestellung des Betätigungselements in ihre Ausgangsstellung zurückzuschieben, sondern lediglich eine Entlastung der Kartusche nach jedem Hub zu gewährleisten.

Weitere Einzelheiten, Merkmale und Vorteile ergeben sich aus der nachstehenden Beschreibung mehrerer Ausführungsbeispiele anhand der Zeichnung.

Es zeigen:
- Fig. 1: eine schematisisierte Schnittansicht einer Ausführungsform eines erfindungsgemäßen Applikators;
- Fig. 2: eine Ansicht des vorderen Endes des Applikators mit von diesem getrennter Patronenhülse;
- Fig. 3: eine Vorderansicht des vorderen Endes des Applikators, wobei die Patronenhülse entfernt ist;
- Fig. 4: eine schematische Ansicht einer weiteren Ausführungsform des erfindungsgemäßen Applikators;
- Fig. 5: eine Schnittansicht eines Teils einer weiteren Ausführungsform eines erfindungsgemäßen Applikators;
- Fig. 6: eine Ausschnittvergrößerung zu Fig. 5; und
- Fig. 7: eine teilweise aufgebrochene Ansicht eines Adapters für einen erfindungsgemäßen Applikator.

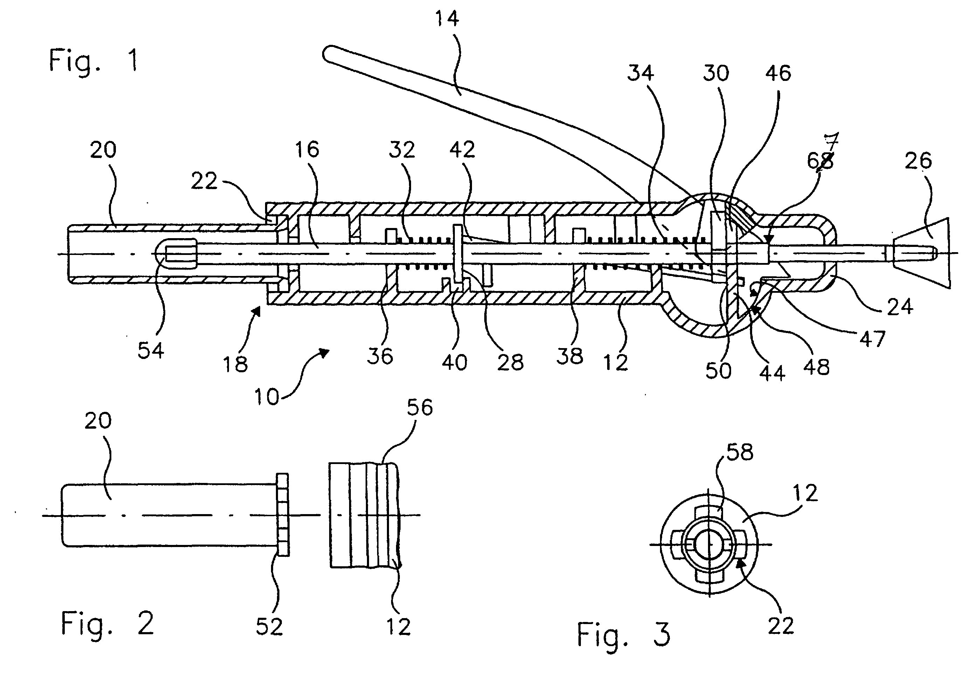

Der in Fig. 1 in einer ersten Ausführungsform dargestellte Applikator 10 weist ein Gehäuse 12 auf, an dem ein als Betätigungshebel 14 ausgebildetes Betätigungselement schwenkbeweglich geführt ist. Das Gehäuse 12 führt ferner eine schiebebewegliche gelagerte Kolbenstange 16 und trägt an seinem vorderen Ende 18 eine Patronenhülse 20 einer nicht im einzelnen dargestellten Patrone für die Aufnahme von zahntechnischem Material. Die Patronenhülse 20 ist lösbar über einen Adapteranschluß 22, insbesondere in Form eines Bajonettverschlusses, mit dem Gehäuse 12 verbunden.

Die Kolbenstange 16 durchtritt das Gehäuse an dessen rückwärtigen Ende 24 und endet dort an einer Greifhandhabe 26. Die Greifhandhabe 26 erlaubt das manuelle Zurückziehen der Stange 16 in eine Ausgangsstellung, in welcher sich die Kolbenstange 16 in der in der Zeichnung gemäß Fig. 1 rechtesten Stellung erstreckt.

Der erfindungsgemäße Applikator 10 weist ein Sperr-Verkantungselement 28 und ein Betätigungs-Verkantungselement 30 auf. Beide Verkantungselemente erstrecken sich im wesentlichen ringförmig um die Kolbenstange 16. Um die Verkantung infolge der Schrägstellung sicherzustellen, weisen sie je einen Innendurchmesser auf, der etwas größer als der Außendurchmesser der Kolbenstange 16 ist. Die Innenfläche der Verkantungselemente 28 und 30 ist in an sich bekannter Weise flach und endet je ziemlich scharfkantig, um die erwünschte Klemmwirkung bei Schrägstellung zu gewährleisten.

Beide Verkantungselemente 28, 30 sind durch Druckfedern 32 bzw. 34 in Rückwärtsrichtung der Kolbenstange, also in Richtung auf die Greifhandhabe 26, federnd vorbelastet. Die Druckfedern 32, 34 sind an ihrem von den Verkantungselement 28, 30 entfernten Ende je an Stützvorsprüngen 36, 38 des Gehäuses 12 abgestützt und erstrecken sich um die Kolbenstange 16.

Das Sperr-Verkantungselement 28 ist ferner einseitig in einer Verkantungselement-Aufnahme 40 an dem Gehäuse 12 abgestützt. Durch die Wirkung der Druckfeder 32 wird das Sperr-Verkantungselement 28 verkantet und sperrt damit die Bewegung der Kolbenstange 16 in Rückwärtsrichtung. Hingegen ist eine - reibungsbelastete - Bewegung der Kolbenstange in Vorwärtsrichtung möglich, da dann die Kolbenstange 16 das Sperr-Verkantungselement 28 gegen die Wirkung der Druckfeder 32 etwas mitnimmt und die Verkantungskraft reduziert.

An der gegenüber der Aufnahme 40 gegenüberliegenden Seite wirkt zudem eine Koppelstange 42 auf das Sperr-Verkantungselement 28 ebenfalls gegen die Wirkung der Druckfeder 32. In dem dargestellten Ausführungsbeispiel gemäß Fig. 1 ist die Koppelstange 42 an ihrem anderen Ende über das Betätigungs-Verkantungselement 30 abgestützt. Die Koppelstange 42 erstreckt sich schräg zur Kolbenstange 16, wobei es sich versteht, daß anstelle der dargestellten Ausführung auch eine andere kraftübertragende Vorrichtung, beispielsweise auch eine Hülse, ein Längselement oder dergleichen für die Übertragung der Druckkraft auf das Sperr-Verkantungselement 28 möglich ist.

In dem dargestellten Ausführungsbeispiel ist die Länge der Koppelstange 42 so bemessen, daß in der Ruhestellung des Betätigungselements 14 die Koppelstange 42 derart auf Sperr-Verkantungselement 28 drückt, daß es die Kolbenstange 16 freigibt. Die Kolbenstange 16 ist damit frei beweglich.

Das Betätigungs-Verkantungselement 30 erstreckt sich in ähnlicher Weise wie das Sperr-Verkantungselement 28 um die Kolbenstange 16. Entsprechend ist das Betätigungs-Verkantungselement 30 in der Lage, bei Verkantung gegenüber der Kolbenstange 16 auf dieser mindestens in einer Richtung festzuhalten. Während das Sperr-Verkantungselement 28 in einer Aufnahme 40 sowohl in Vorwärtsrichtung als auch in Rückwärtsrichtung abgestützt ist, liegt das Betätigungs-Verkantungselement lediglich einseitig an einem Stützanschlag 44 des Gehäuses an. Der Stützanschlag 44 stützt das Betätigungs-Verkantungselement 30 in Rückwärtsrichtung ab.

Das Betätigungselement 14 weist einen Mitnehmer 46 auf, der fest mit ihm verbunden ist und für die Anlage an dem Betätigungs-Verkantungselement 30 bestimmt ist. Hierzu weist das Betätigungs-Verkantungselement 30 eine in Rückwärtsrichtung gewandte Anlagefläche auf. Durch Betätigung des Betätigungselements 14 gegen den Uhrzeigersinn - bezogen auf die Darstellung gemäß Fig. 1 - wird der Mitnehmer 46 in Vorwärtsrichtung bewegt und wirkt hierdurch auf das Betätigungs-Verkantungselement 30, und zwar einseitig. Da die Druckfeder 34 in Gegenrichtung wirkt, verkantet das Betätigungs-Verkantungselement 30 und ist in der Lage, die Kolbenstange 16 in Vorwärtsrichtung zu bewegen.

Das Betätigungselement 14 ist an dem Gehäuse 12 schwenkbeweglich gelagert. Hierzu kann sich eine Achse des Betätigungselements quer durch das Gehäuse erstrecken. Anstelle dessen ist es jedoch auch möglich, entsprechend geformte Führungsflächen 47, 48 zwischen dem Gehäuse und dem Betätigungselement 14 vorzusehen, an welchen das Betätigungselement gleitet, so daß die erwünschte Schwenkfunktion sichergestellt ist.

Bei dem dargestellten Ausführungsbeispiel gemäß Fig. 1 erstreckt sich die Schwenkachse des Schwenkhebels 14 etwa im Bereich der Koppelstange 42 und des Betätigungs-Verkantungselements 30. Das Betätigungselement 14 weist ferner eine Stützstelle 50 für die Koppelstange 42 auf, und zwar an der bezogen auf die Schwenkachse gegenüber dem Mitnehmer 46 gegenüberliegenden Seite des Hebels 14. Bei Bewegung des Mitnehmers 46 in Vorwärtsrichtung bewegt sich somit die Stützstelle 50 in Rückwärtsrichtung, so daß die Koppelstange 42 sich ebenfalls in Rückwärtsrichtung bewegt und das Sperr-Verkantungselement 28 entsprechend der Wirkung der Druckfeder 32 sperrt.

Die Betätigung des Betätigungselements 14 aus der in Fig. 1 dargestellten Ruhestellung in eine Arbeitsstellung, in welcher der Hebel 14 gegen den Uhrzeigersinn geschwenkt ist und an dem Gehäuse 12 anliegt oder sich zumindest in dessen Nähe erstreckt, bewirkt, daß zunächst das Betätigungs-Verkantungselement über den Mitnehmer 46 verkantet und mit der Bewegung der Kolbenstange 16 in Vorwärtsrichtung beginnt. Zugleich wird die Koppelstange 42 entlastet, so daß das Sperr-Verkantungselement 28 zu verkanten beginnt. Sobald die Bewegung gegen den Uhrzeigersinn beginnt, wird Sperr-Verkantungselement voll entlastet, so daß die Kolbenstange 16 sich lediglich vorwärts bewegen kann, nicht jedoch in Rückwärtsrichtung.

Mit dem Erreichen der Arbeitsstellung ist die Bewegung der Betätigungselemente in Arbeitsrichtung abgeschlossen. In dieser Stellung kann die Bewegung des Betätigungselements 14 in die Gegenrichtung eingeleitet werden. Aufgrund der Wirkung der Druckfeder 34, die durch den gemeinsamen Vorschub von Betätigungs-Verkantungselement 30 und Kolbenstange 16 zusammen gedrückt worden ist, erfolgt die Bewegung des Betätigungselements 14 in Gegenrichtung federunterstützt. Die Koppelstange 42 wirkt zunächst noch nicht auf das Sperr-Verkantungselement 28, so daß die Kolbenstange 16 in Rückwärtsrichtung gesperrt wird und beim Lösen des Betätigungselements 14 das Betätigungs-Verkantungselement 30 in Rückwärtsrichtung an der Kolbenstange 16 entlang gleitet. Dies geschieht, bis die Position des Betätigungshebels 14 erreicht ist, in der die Stützstelle 50 die Koppelstange 42 aktiviert, insbesondere mit Druck beaufschlagt. Hierdurch wird das Sperr-Verkantungselement 28 entsperrt und gibt damit die Kolbenstange 16 frei. Aufgrund der Reibung zwischen dem noch verkanteten Betätigungs-Verkantungselement 30 und der Kolbenstange 16 wird diese nun leicht in Rückwärtsrichtung bewegt, bis die in Fig. 1 dargestellte Ruhestellung des Betätigungselements 14 erreicht ist.

Es versteht sich, daß durch eine geeignete Wahl der Länge der Koppelstange 42 im Verhältnis zum Abstand zwischen dem Sperr-Verkantungselement 28 und der Stützadapter 50 die Stellung des Betätigungselements 14 einstellbar ist, an welcher die Rückwärtsbewegung der Kolbenstange 16 beginnt. Die Rückwärtsbewegung dient der eindeutigen Entlastung der auszupressenden Masse, um so ein Nachpressen sicher zu vermeiden.

Die Vorwärtsbewegung der Kolbenstange 16 abzüglich der kleinen Rückwärtsbewegung zur Vermeidung des Nachpressens bildet einen Hub des erfindungsgemäßen Applikators 10.

Aus Fig. 2 ist die Patronenhülse 20 in dem Zustand ersichtlich, bevor sie in das Gehäuse 12 eingesetzt ist. Die Patronenhülse weist an ihrem dem Gehäuse 12 zugewandten Ende vier Adaptervorsprünge 50 auf. Die Patrone enthält die zähviskose Masse, insbesondere das Zahnfüllmaterial, das durch den erfindungsgemäßen Applikator 10 ausdrückbar ist. Hierzu drückt die Kolbenstange mit ihrem an dem vorderen Ende vorgesehenen Stempel 54 auf einen Kolben der Patrone, die hierdurch das Zahnfüllmaterial, das insbesondere ein lichthärtendes Zahnfüllmaterial sein kann, abgibt.

Wie aus Fig. 2 ebenfalls ersichtlich ist, weist das Gehäuse 12 an seinem Außenumfang im Bereich des vorderen Endes eine Riffelung 56 auf, die Verbesserung der Handhabbarkeit dient.

Aus Fig. 3 ist ersichtlich, daß der Adapteranschluß 22 nach der Art eines Bajonettverschlusses arbeitet. Adaptervorsprünge 52 erstrecken sich gleichmäßig verteilt um den Umfang der Patronenhülse 20 und sind dafür geeignet, in Ausnehmungen 58, die entsprechend geformt sind, an dem vorderen Ende des Gehäuses 12 einzugreifen. Durch eine Verdrehung der Patronenhülse um beispielsweise knapp 45° erfolgt eine Verrastung der Adaptervorsprünge an dem Adapteranschluß 22, so daß die Patronenhülse 20 an dem Gehäuse 12 sicher und biegesteif arretiert ist.

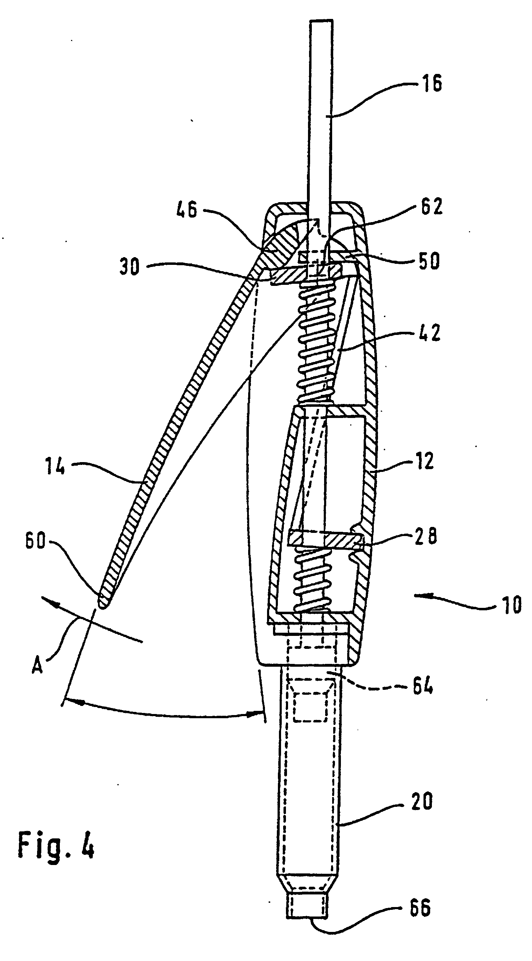

Eine gegenüber der Ausführungsform gemäß Fig. 1 abgeänderte Ausführungsform ist aus Fig. 4 ersichtlich. Bei dieser Ausführungsform sind das Sperr-Verkantungselement 28 und das Betätigungs-Verkantungselement 30 hintereinander auf der Kolbenstange 16 angeordnet. Die Koppelstange 42 erstreckt sich zwischen dem Sperr-Verkantungselement 28 und dem Bereich des Betätigungs-Verkantungselemehts 30. In der in Fig. 4 dargestellten Ruhestellung ist die Koppelstange 42 unbelastet, so daß das Sperr-Verkantungselement 28 auf der Kolbenstange 16 sperrt. Im Unterschied zur Ausführungsform gemäß Fig. 1 läßt sich daher die Kolbenstange 16 in der Ruhestellung nicht frei bewegen. Zudem findet keine Bewegung der Kolbenstange 16 bei Entlastung des Betätigungselements 14 in die Ruhestellung statt, die in Fig. 4 dargestellt ist. Das Betätigungselement 14 läßt sich jedoch in Richtung eines Pfeiles A weiter in Gegenrichtung über die Ruhestellung hinaus bewegen, und erreicht dort eine Lösestellung. In dieser Stellung wirkt es über die Stützstelle 50 nach der Art eines zweiarmigen Hebels auf die Koppelstange 42 und über die Koppelstange 42 auf das Sperr-Verkantungselement 28 in eine Stellung, in welcher die Kolbenstange 16 freigegeben wird.

Ein Mitnehmer 46 für das Betätigungs-Verkantungselement 30 ist als entsprechend vergrößerte vorspringende Fläche an dem Betätigungselement 14 ausgebildet.

Das Betätigungselement 14 ist an dem Gehäuse schwenkbeweglich gelagert, wobei sich Achsstummel, die aus der Zeichnung nicht ersichtlich sind und sich nach oben und unten aus der Zeichnungsebene hinaus erstrecken, in dem Gehäuse 12 gelagert sind. Anstelle dieser Ausgestaltung ist es in einer abgeänderten Ausführungsform zu Fig. 4 vorgesehen, daß der das Betätigungselement bildende Hebel zweischenklig ausgebildet ist, wobei die beiden Schenkel im Bereich des freien Endes zusammenlaufen und daß sich beide Schenkel seitlich an dem Gehäuse 12 entlang bis zu der Schwenkachse 62 erstrecken, an der sie das Gehäuse 12 von außen nach innen durchtreten und die Stützstelle 50 und den Mitnehmer 46 ausbilden.

Der gesamte Bewegungsweg des erfindungsgemäßen Adapters 10 läßt sich aus Fig. 4 im Bereich der Patronenhülse 20 ersehen. Die Patronenhülse 20 nimmt die nicht dargestellte hochviskose Masse, insbesondere das Zahnfüllmaterial auf. In der Ausgangsstellung, in welcher sich die Kolbenstange 16 an ihrer hinteren Endposition befindet, ist ein Kolben 64 dem Gehäuse 12 benachbart. Der Kolben 64 wird durch jeden durch die Betätigung des Betätigungselements 14 erzeugten Hub um ein Stück in Arbeitsrichtung bewegt, bis er dem Austrittsende 66 der Patrone 20 benachbart ist. Bei jeder Betätigung des Hebels 14 wird etwas Zahnfüllmaterial am Austrittsende 66 abgegeben.

Gemäß einer modifizierten Ausgestaltung ist es vorgesehen, eine Bewegung der Kolbenstange 16 nur genau bis zu der Position zu erlauben, an welcher der Kolben 64 seine Endstellung erreicht hat. Hierzu ist der aus Fig. 1 ersichtliche Absatz 67 vorgesehen, der in dieser Stellung des Kolbens 64 gerade in den Bereich des Betätigungs-Verkantungselements 30 gerät. Aufgrund des anschließend an den Absatz 67 verminderten Durchmessers der Kolbenstange 16 greift dann das Betätigungs-Verkantungselement 30 nicht mehr, so daß weiteres Andrücken des Hebels 14 keinen Vorschub der Kolbenstange 16 ergibt.

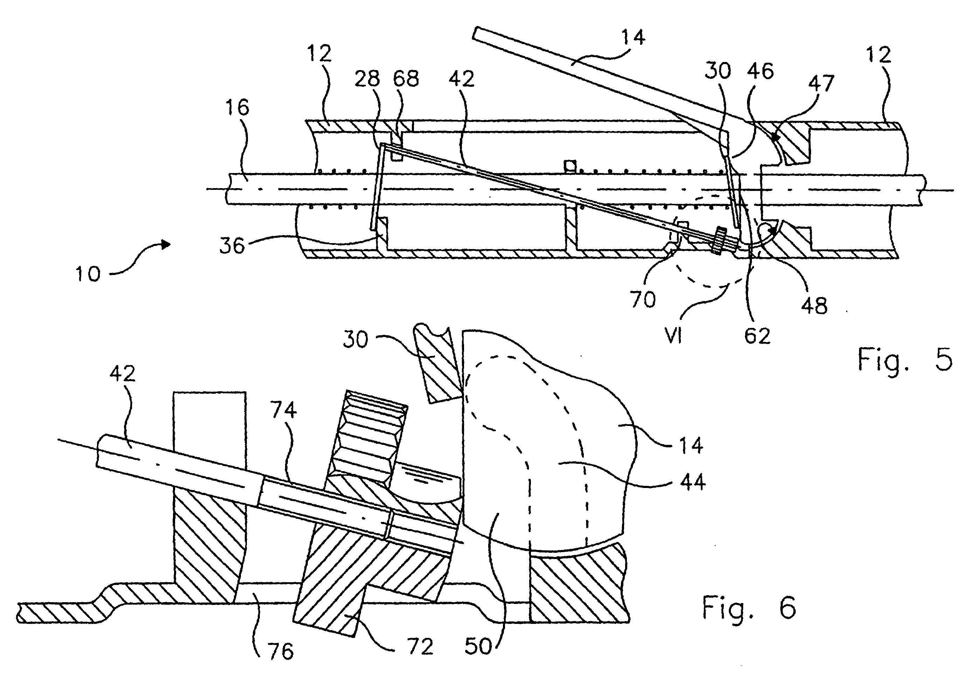

Eine weitere Ausführungsform des erfindungsgemäßen Applikators 10 ist aus Fig. 5 ersichtlich. Bei dieser Ausführungsform ist die schwenkbewegliche Führung des Betätigungselements 14 durch Führungsflächen 47 und 48 gewährleistet, die an dem schwenkbaren Betätigungshebel 14 und dem Gehäuse 12 ausgebildet sind. Die Führungsflächen 47 und 48 weisen einen gemeinsamen Radius auf, so daß der Hebel 14 um die Schwenkachse 62 schwenkbar ist, ohne daß es erforderlich wäre, daß Achsstummel das Gehäuse 12 durchtreten. Hierzu erstreckt sich der Hebel 14 im Bereich der Führungsflächen beidseitig der Kolbenstange 16 und bildet sowohl den Mitnehmer 46 für das Betätigungs-Verkantungselement 30 als auch die Stützstelle 50 für die Koppelstange 42 aus.

Die Koppelstange 42 ist zusätzlich an dem Gehäuse 12 gleitbeweglich abgestützt, und zwar durch je U-förmige Aufnahmen 68 und 70. Auch bei diesem Ausführungsbeispiel erstreckt sich die Koppelstange 42 schräg über die Kolbenstange 16 hinweg.

Bei einer anderen Ausgestaltung ist es vorgesehen, die Anordnung der Aufnahme 68 für die Koppelstange 42 und der Lagerstelle 36 für das Sperr-Verkantungselement 28 zu vertauschen. Die Koppelstange 42 erstreckt sich dann im wesentlichen parallel zur Kolbenstange 16. Bei dieser Ausgestaltung ist es jedoch erforderlich, daß die Aufnahmen 68 und 70 die Koppelstange in jede Richtung abstützen, während bei dem dargestellten Ausführungsbeispiel gemäß Fig. 5 eine Abstützung durch U-förmige Aufnahmen ausreicht.

Aus Fig. 6 ist eine Detailvergrößerung der Ausführungsform gemäß Fig. 5 ersichtlich, die den Übergang zur Lagerung der Koppelstange 42 zeigt. Wie aus Fig. 6 ersichtlich ist, weist die Koppelstange 42 eine Stellvorrichtung 72 auf. Über die Stellvorrichtung 72, die als Rändelmutter ausgebildet sein kann, läßt sich der Wirkabstand zwischen dem Sperr-Verkantungselement 28 und der Druckfläche oder Stützstelle 50 oder die Vorspannung der Koppelstange 42 einstellen. Hierzu weist das Ende der Koppelstange 42 ein Außengewinde 74 und die Rändelmutter 72 ein entsprechende Innengewinde auf. Über eine Durchbrechung 76 des Gehäuses ist die Rändelmutter 72 betätigbar. Die Rändelmutter 72 ist bevorzugt als selbstsichernde Mutter und ihr Bereich ist mit einer nicht dargestellten Abdeckung abgedeckt, so daß lediglich eine Justage für die Einstellung des Applikators vorgesehen ist.

Mit der Rändelmutter 72 läßt sich nicht nur der Hub einstellen. Vielmehr ist es auch möglich, die Koppelstange 42 auch in der in Fig. 5 dargestellten Ruhestellung des Hebels 14 soweit unter Vorspannung zu setzen, daß das Sperr-Verkantungselement 28 die Kolbenstange 16 bereits in der Ruhestellung freigibt. Dann läßt sich die Kolbenstange 16 in der Ruhestellung frei bewegen, so daß die Kolbenstange 16 auch den Druck auf die pastöse Masse in der Ruhestellung vermeidet. Bei einem weiteren Verstellen der Rändelmutter 72 in Richtung einer Verlängerung der Koppelstange 42 läßt sich das Ausmaß der Bewegung der Kolbenstange 16 in Rückwärtsrichtung beim Lösen des Betätigungshebels 14 einstellen. Bei dieser Ausführungsform des erfindungsgemäßen Applikators ist somit die Vorwärtsbewegung der Kolbenstange 16 bei vollständiger Betätigung des Betätigungshebels 14 immer gleich groß, während die Rückwärtsbewegung - und damit der Hub - einstellbar ist.

Um auch in der Position der Stellvorrichtung 72 mit in Ruhestellung fester Kolbenstange 16 eine Bewegung der Kolbenstange 16 zum Neubeladen der Patrone 20 in Rückwärtsrichtung zu erlauben, kann der Hebel 14 auch in eine Lösestellung geschwenkt werden, indem er von dem Gehäuse 12 weggezogen wird. In dieser Stellung drückt die Druckfläche 50 auf die Stellvorrichtung 72 und damit die Koppelstange 42 und zugleich auch auf das Betätigungs-Verkantungselement 30, das von der gehäusefesten Stütze 44 abgehoben wird. Beide Verkantungselemente 30 und 28 geben die Kolbenstange 16 frei, so daß sie frei verschieblich ist.

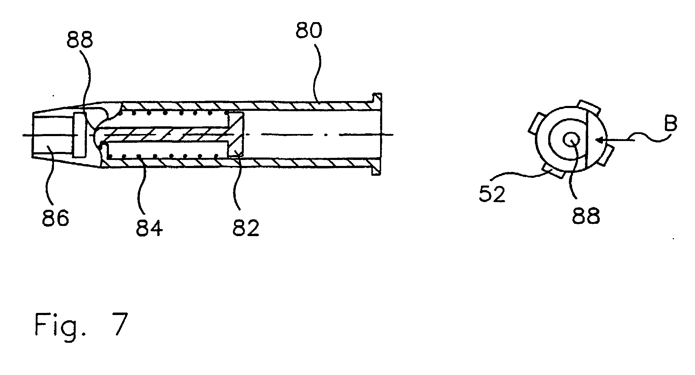

Gemäß einer weiteren Ausführungsform ist der Anschluß eines federbelasteten Adapters vorgesehen, wie er aus Fig. 7 ersichtlich ist. Der Adapter 80 ist für den Eingriff an dem Adapteranschluß 22 des Gehäuses vorgesehen und weist einen Kolben 82 auf, der in Rückwärtsrichtung der nicht dargestellten Kolbenstange federbelastet ist. Die Kolbenstange 16 ist dafür vorgesehen, mit ihrem Stempel 54 oder ihrem vorderen Ende am Kolben 82 anzuliegen. Aufgrund der Federbelastung durch die Druckfeder 84 wird die Kolbenstange bei Freigabe der Bewegung der Kolbenstange 16, beispielsweise bei Betätigung des Hebels 14 in die Lösestellung, in ihre Ausgangsposition zurückgeschoben, ohne daß es eines manuellen Zurückziehens bedarf.

Der Adapter 80 ist dafür ausgelegt, eine Kartusche an seiner Kartuschenaufnahme 86 aufzunehmen. Hierzu ist die Kartuschenaufnahme einseitig offen, und eine nicht dargestellte Kartusche mit Zahnfüllmaterial läßt sich seitlich in den aus elastischem Kunststoff bestehenden Adapter 80 einschnappen, indem sie aus Richtung des Pfeils B eingedrückt wird. Der Kolben 82 weist an seinem vorderen Ende einen Vorsprung 88 auf, über welchen er unverlierbar in dem Adapter 80 gehalten wird.

Gemäß einer weiteren besonders bevorzugten Ausgestaltung ist es vorgesehen, die Kolbenstange 10 im Eingriffsbereich des Betätigungs- Verkantungselements 30 mit einer Mikroverzahnung zu versehen. Bevorzugt weist die Mikroverzahnung ein Sägezahnprofil auf, wobei die Tiefe etwa 20 - 100 Mikrometer, bevorzugt etwa 50 Mikrometer betragen kann.

Es versteht sich, daß die Mikroverzahnung bei Bedarf auch im Bereich des Sperr/Verkantungselements (28) vorgesehen sein kann. Ferner mag es aus fertigungstechnischen Gründen einfacher sein, die gesamte Kolbenstange 16 mit der Mikroverzahnung zu versehen, was die Funktion der erfindungsgemäßen Lösung nicht beeinträchtigt.

## Patentansprüche

1. Applikator (10), insbesondere für hochviskose Massen, mit einem Gehäuse (12) und einer in diesem gelagerten Kolbenstange (16), die durch das Bewegen eines Betätigungselements (14) von einer Ruhe- in eine Arbeitsstellung, also beim Bewegen in Arbeitsrichtung, über zwei hintereinander angeordnete Verkantungselemente (28, 30) in einer Vorwärtsrichtung bewegbar ist, wobei ein Betätigungs-Verkantungselement (30) bei Betätigung des Betätigungselements (14) verkantet und zusammen mit der Kolbenstange vorwärts bewegbar ist und ein Sperr-Verkantungselement (28) federbelastet in Rückwärtsrichtung verkantet und an dem Gehäuse abgestützt ist, **dadurch gekennzeichnet, daß** das Betätigungselement (14) bei Bewegung in Gegenrichtung zur Arbeitsrichtung auf eine Koppelstange (42) wirkt, die das Sperr-Verkantungselement (28) freigibt, und daß das Betätigungselement (14) als Handgriff ausgebildet ist und für die Betätigung der Kolbenstange (16) in Vorwärtsrichtung oder in Arbeitsrichtung des Betätigungselementes (14) zum Gehäuse (12) drückbar, sowie insbesondere bei Betätigung in Richtung zur Lösestellung von dem Gehäuse (12) wegziehbar ist.

2. Applikator nach Anspruch 1, **dadurch gekennzeichnet, daß** die Koppelstange (42) in Ruhestellung des Betätigungselements (14) auf das Sperr-Verkantungselement (28) wirkt und die Kolbenstange (16) in Ruhestellung frei beweglich ist.

3. Applikator nach Anspruch 1, **dadurch gekennzeichnet, daß** die Koppelstange (42) von der Ruhestellung des Betätigungselements (14) ausgehend über seine Ruhestellung hinaus bewegbar ist und in einer Lösestellung die Kolbenstange (16) frei beweglich ist.

4. Applikator nach einem der vorhergehenden Ansprüche, **dadurch gekennzeichnet, daß** der Handgriff sich in Ruhestellung in einem spitzen Winkel zur Kolbenstange (16), insbesondere von etwa 26°, erstreckt.

5. Applikator nach einem der vorhergehenden Ansprüche, **dadurch gekennzeichnet, daß** das Betätigungs-Verkantungselement (30) bei Verkantung durch das Betätigungselement (14) nach der Art eines einarmigen Hebels auf die Kolbenstange (16) wirkt und das Betätigungselement (14) an dem Gehäuse (12) abgestützt ist.

6. Applikator nach einem der vorhergehenden Ansprüche, **dadurch gekennzeichnet, daß** das Betätigungselement (14) als federbelastet in die Ruhestellung gedrückter Hebel ausgebildet ist, dessen freies Ende (60) insbesondere im wesentlichen in Vorwärtsrichtung weist.

7. Applikator nach einem der vorhergehenden Ansprüche, **dadurch gekennzeichnet, daß** das Betätigungselement (14) einen Mitnehmer (46) aufweist, der auf das Betätigungs-Verkantungselement (30) wirkt und bei Bewegen des Betätigungselements (14) in Arbeitsrichtung das Betätigungs-Verkantungselement (30) auf die Kolbenstange (16) in Vorwärtsrichtung der Kolbenstange (16) drückt.

8. Applikator nach einem der vorhergehenden Ansprüche, **dadurch gekennzeichnet, daß** die Koppelstange (42) sich zwischen dem Sperr-Verkantungselement (28) und dem Betätigungselement (14), insbesondere über das Betätigungs-Verkantungselement (30), erstreckt und an dem Betätigungsselement (14) an einer Stelle (50) abgestützt ist, die von dem Bereich des Mitnehmers (46) des Betätigungselements (14) beabstandet ist.

9. Applikator nach einem der Ansprüche 1 bis 7, **dadurch gekennzeichnet, daß** die Koppelstange (42) sich zwischen dem Sperr-Verkantungselement (30) und dem Betätigungselement (14) schräg zur Kolbenstange (16) und über diese hinaus erstreckt.

10. Applikator nach einem der Ansprüche 1 bis 8, **dadurch gekennzeichnet, daß** die Koppelstange (42) endseitig je Gelenke aufweist.

11. Applikator nach einem der vorhergehenden Ansprüche, **dadurch gekennzeichnet, daß** die Koppelstange (42) als Schubstange ausgebildet ist und eine solche Länge aufweist, daß beim Freigeben des Betätigungselements (14) nach erfolgter Betätigung das Sperr-Verkantungselement (28) gelöst ist.

12. Applikator nach einem der vorhergehenden Ansprüche, **dadurch gekennzeichnet, daß** das Sperr-Verkantungselement (28) vor dem Betätigungs-Verkantungselement (30), in Vorwärtsrichtung der Kolbenstange (16) gesehen, angeordnet ist.

13. Applikator nach einem der vorhergehenden Ansprüche, **dadurch gekennzeichnet, daß** das Gehäuse (12) eine Anlage oder Stütze (44) für das Betätigungs-Verkantungselement (30) an einer solchen Stelle bildet, daß es sich in Ruhestellung des Betätigungselements (14) verkantungsfrei auf der Kolbenstange (16) erstreckt.

14. Applikator nach einem der vorhergehenden Ansprüche, **dadurch gekennzeichnet, daß** die Koppelstange (42) als Lösestange ausgebildet ist, die eine Verkantung des Sperr-Verkantungselements (28) für den letzten Teil der Bewegung des Betätigungselements (14) in Gegenrichtung zur Arbeitsrichtung gewährleistet und daß die Kolbenstange (16) beim Lösen des Betätigungselements (14) leicht in Rückwärtsrichtung bewegbar ist.

15. Applikator nach einem der vorhergehenden Ansprüche, **dadurch gekennzeichnet, daß** die Ausdrückvorrichtung (10) einen Anschluß für eine mit der insbesondere mit Zahnfüllmaterial als hochviskoser Masse gefüllten Patrone (20) aufweist.

16. Ausdrückvorrichtung nach einem der vorhergehenden Ansprüche, **dadurch gekennzeichnet, daß** die Kolbenstange (16) an ihrem rückwärtigen Ende eine Markierung für die Stelle aufweist, die dem Ende der Bewegung der Kolbenstange (16) in Vorwärtsrichtung und insbesondere dem vollständigen Leeren der Patrone (20) entspricht.

17. Applikator nach einem der vorhergehenden Ansprüche, **dadurch gekennzeichnet, daß** das Gehäuse (12) einen Anschluß (22) für einen Adapter (80) aufweist, der einen in Rückwärtsrichtung federbelasteten Kolben (82) führt und eine Rastaufnahme (86) für eine Kartusche mit insbesondere lichthärtendem Zahnfüllmaterial aufweist.

18. Applikator nach einem der vorhergehenden Ansprüche, **dadurch gekennzeichnet, daß** die Koppelstange (42) sich im spitzen Winkel schräg zur Kolbenstange (16) ersteckt.

19. Applikator nach einem der vorhergehenden Ansprüche, **dadurch gekennzeichnet, daß** die Kolbenstange (16) einen Absatz aufweist, der am Ende der Bewegung der Kolbenstange (16) in Arbeitsrichtung das Betätigungs-Verkantungselement (30) außer Eingriff mit der Kolbenstange (16) bringt.

20. Applikator nach einem der vorhergehenden Ansprüche, **dadurch gekennzeichnet, daß** die Kolbenstange (16) mindestens im Bereich des Betätigungs- Verkantungselements (30) eine Mikroverzahnung aufweist.

## Claims

1. An applicator (10) for highly viscous compounds, having a housing (12) and a piston rod (16) which is mounted in the latter and which can be moved in a forward direction by the movement of an actuating member (14) from a rest position into an operative position, i.e. during movement in the operating direction, via two consecutively arranged canting members (28,30), wherein one actuating/canting member (30) can move forwards upon actuation of the actuating member (14) and together with the piston rod and a locking/canting member (28) is canted spring-loaded in the rearward direction and is supported on the housing, **characterised in that** during movement in the opposite direction to the operating direction the actuating member (14) acts on a coupling rod (42) which releases the locking/canting member (28), and **in that** the actuating member (14) is in the form of a handle and for actuation of the piston rod (16) in the forward direction or in the operating direction of the actuating member (14) it can pressed towards the housing (12) and, in particular, upon actuation towards the release position, it can be pulled away from the housing (12).

2. An applicator according to Claim 1, **characterised in that** in the rest position of the actuating member (14) the coupling rod (42) acts on the locking/canting member (28) and the piston rod (16) is freely movable in the rest position.

3. An applicator according to Claim 1, **characterised in that**, starting from the rest position of the actuating member (14), the coupling rod (42) can move beyond its rest position and the piston rod (16) is freely movable in a release position.

4. An applicator according to any one of the preceding Claims, **characterised in that** in the rest position the handle extends at an acute angle to the piston rod (16), in particular approximately 26°.

5. An applicator according to any one of the preceding Claims, **characterised in that** during canting by the actuating member (14) in the manner of a one-armed lever the actuating/canting member (30) acts on the piston rod (16) and the actuating member (14) is supported on the housing (12).

6. An applicator according to any one of the preceding Claims, **characterised in that** the actuating member (14) is in the form of a lever pressed spring-loaded into the rest position, the free end (60) of which lever points in particular in essentially a forward direction.

7. An applicator according to any one of the preceding Claims, **characterised in that** the actuating member (14) has an engagement means (46) which acts on the actuating/canting member (30) and, upon actuation of the actuating member (14) in the operating direction, the actuating/canting member (30) presses on the piston rod (16) in the forward direction of the piston rod (16).

8. An applicator according to any one of the preceding Claims, **characterised in that** the coupling rod (42) extends between the locking/canting member (28) and the actuating member (14), in particular via the actuating/canting member (30), and is supported on the actuating member (14) at a location (50) which is spaced apart from the region of the engagement means (46) of the actuating member (14).

9. An applicator according to any one of Claims 1 to 7, **characterised in that** the coupling rod (42) extends between the locking/canting member (30) [sic] and the actuating member (14) obliquely to the piston rod (16) and beyond the latter.

10. An applicator according to any one of Claims 1 to 8, **characterised in that** the coupling rod (42) has articulations at each end.

11. An applicator according to any one of the preceding claims, **characterised in that** the coupling rod (42) is in the form of a push rod and is of such a length that, upon release of the actuating member (14), the locking/canting member (28) is released after actuation of the locking/canting member (28) has taken place.

12. An applicator according to any one of the preceding claims, **characterised in that** the locking/canting member (28) is disposed in front of the actuating/canting member (30), viewed in the forward direction of the piston rod (16).

13. An applicator according to any one of the preceding claims, **characterised in that** the housing (12) forms an abutment or support (44) for the actuating/canting member (30) at such a location that, in the rest position of the actuating member (14), it extends without canting on the piston rod (16).

14. An applicator according to any one of the preceding claims, **characterised in that** the coupling rod (42) is in the form of a release rod which ensures canting of the locking/canting member (28) for the last portion of the movement of the actuating member (14) in the opposite direction to the operating direction, and **in that**, upon release of the actuating member (14), the piston rod (16) can readily be moved in the rearward direction.

15. An applicator according to any one of the preceding Claims, **characterised in that** the discharge device (10) has a connection for a cartridge (20) filled in particular with dental filling material as the highly viscous compound.

16. An applicator according to any one of the preceding Claims, **characterised in that** at its rear end the piston rod (16) has a marking for the location which corresponds to the end of the movement of the piston rod (16) in the forward direction and in particular to complete emptying of the cartridge (20).

17. An applicator according to any one of the preceding Claims, **characterised in that** the housing (12) has a connection (22) for an adapter (80) which guides a piston (82) spring-loaded in a rearward direction and has a locating receptacle (86) for a cartridge containing, in particular, light-curing dental filling material.

18. An applicator according to any one of the preceding Claims, **characterised in that** the coupling rod (42) extends at an acute angle obliquely to the piston rod (16).

19. An applicator according to any one of the preceding Claims, **characterised in that** the piston rod (16) has a step which at the end of the movement of the piston rod (16) in the operating direction disengages the actuating/canting member (30) from the piston rod (16).

20. An applicator according to any one of the preceding Claims, **characterised in that** the piston rod (16) has one microtoothing at least in the vicinity of the actuating/canting member (30).

## Revendications

1. Applicateur (10), en particulier pour des masses à haute viscosité, et comportant un boîtier, ainsi qu'une tige à piston (16), installée dans ce boîtier, qui par les mouvements d'un élément de commande (14), passe d'une position de repos à une position de travail, et qui peut également lors du déplacement dans la direction de travail se déplacer à travers deux éléments d'arrêt (28, 30) positionnés l'un derrière l'autre ; dont un élément d'arrêt de commande (30), lors de l'activation de l'élément de commande (14), est arrêté et peut être avancé en même temps que la tige à piston, et un élément d'arrêt de fermeture (28) chargé par ressort, retenu vers l'arrière et soutenu sur le boîtier, **caractérisé par le fait que** l'élément de commande (14) lors d'un mouvement opposé à la direction de travail, agit sur une tige de liaison (42), qui libère l'élément d'arrêt de commande (28) et que l'élément de commande (14) se présente comme une poignée que l'on peut presser vers le boîtier (12) pour l'actionnement de la tige à piston (16) vers l'avant ou dans la direction de travail de l'élément de commande (14), et plus particulièrement que l'on peut retirer du boîtier (12) lors d'un actionnement en direction de la position de desserage.

2. Applicateur selon la revendication 1, **caractérisé par le fait que** la tige de liaison (42) agit sur l'élément d'arrêt de fermeture (28) lorsque l'élément de commande (14) est au repos et que la tige de piston (16) peut être librement déplacée en position de repos.

3. Applicateur selon la revendication 1, **caractérisé par le fait que** la tige de liaison (42), à partir de la position de repos de l'élément de commande (14), peut être déplacée au-delà de sa position de repos et que dans une position de desserrage, la tige de piston (16) se déplace librement.

4. Applicateur correspondant à une des revendications ci-dessus, **caractérisé par le fait que** la poignée se présente en position de repos selon un angle aigu par rapport à la tige de liaison (16), plus particulièrement selon un angle de 26°.

5. Applicateur correspondant à l'une des revendications précédentes, **caractérisé par le fait que** l'élément d'arrêt de commande (30), lors de l'arrêt par l'élément de commande (14), agit comme un levier à bras unique sur la tige à piston (16) et **par le fait que** l'élément de commande (14) est appuyé contre le boîtier.

6. Applicateur correspondant à l'une des revendications ci-dessus, **caractérisé par le fait que** l'élément de commande (14) se présente dans la position de repos comme un levier actionné par un ressort, dont l'extrémité libre (60) est plus spécifiquement orientée vers la direction avant.

7. Applicateur correspondant à l'une des revendications ci-dessus, **caractérisé par le fait que** l'élément de commande (14) présente un tenon d'entraînement qui agit sur l'élément de commande par basculement (30), et **par le fait que** le mouvement de l'élément de commande (14) dans la direction de travail presse l'élément de commande par basculement (30) sur la tige de pignon (16) dans la direction d'avance de la tige de pignon (16).

8. Applicateur correspondant à l'une des revendications ci dessus, **caractérisé par le fait que** la tige de liaison (42) se situe entre l'élément d'arrêt de fermeture (28) et l'élément de commande (14), et en particulier à travers l'élément d'arrêt de commande (30) et qu'elle est supportée à l'élément de commande (14) à un endroit (50), qui est distant de la région du tenon d'entraînement (46) de l'élément de commande (14).

9. Applicateur correspondant à l'une des revendications de 1 à 7, **caractérisé par le fait que** la tige de liaison (42) se situe entre l'élément d'arrêt de fermeture (30) et l'élément de commande (14), obliquement à la tige de piston (16), et dépasse d'elle.

10. Applicateur correspondant à l'une des revendications de 1 à 8, **caractérisé par le fait que** la tige de liaison (42) présente une articulation à chaque extrémité.

11. Applicateur correspondant à l'une de revendications ci-dessus, **caractérisé par le fait que** la tige de liaison (42) a la forme d'une bielle et présente une longueur telle, que lors de la libération de l'élément de commande (14) à la suite d'une activation, l'élément d'arrêt de fermeture (28) est libéré.

12. Applicateur correspondant à l'une des revendications ci-dessus, **caractérisé par le fait que** l'élément d'arrêt de fermeture (28) est placé avant l'élément d'arrêt de commande (30), dans la direction d'avance de la tige de piston (16).

13. Applicateur correspondant à l'une des revendications ci-dessus, **caractérisé par le fait que** le boîtier (12) forme une patte ou un support (44) pour l'élément d'arrêt de commande (30) à un emplacement tel que lorsque l'élément de commande (14) est au repos, il s'étend sans contrainte sur la tige de piston (16).

14. Applicateur correspondant à l'une des revendications ci-dessus, **caractérisé par le fait que** la tige de liaison (42) a la forme d'une tige de desserrage, qui garantit un basculement de l'élément d'arrêt de fermeture (28) durant la fin de la course de l'élément de commande (14) dans une direction inverse à la direction de travail, et en ce que la tige à pignon (16) revienne facilement en arrière lors du desserage de l'élément de commande (14).

15. Applicateur correspondant à l'une des revendications ci-dessus, **caractérisé par le fait que** dispositif de sortie (10) est équipé d'un raccord pour une cartouche (20) remplie de matière visqueuse, plus spécifiquement de la matière de charge dentaire.

16. Dispositif de sortie correspondant à l'une des revendications ci-dessus, **caractérisé par le fait que** la tige à piston (16) à son extrémité arrière comporte une marque indiquant la position qui, à la fin du mouvement de la tige de piston (16), correspond à la reprise du mouvement en avant, et indique plus spécifiquement que la cartouche (20) est totalement vide.

17. Applicateur correspondant à l'une des revendications ci-dessus, **caractérisé par le fait que** le boîtier (12) présente un raccord (22) pour un adaptateur (80), qui guide en direction de marche arrière un piston commandé par ressort (82) et un logement (86) pour une cartouche, plus particulièrement contenant de la matière de charge dentaire durcissant à la lumière.

18. Applicateur correspondant à l'une des revendications ci-dessus, **caractérisé par le fait que** la tige de liaison (42) se présente obliquement, en angle aigu par rapport à la tige de piston (16).

19. Applicateur correspondant à l'une des revendications ci-dessus, **caractérisé par le fait que** la tige à piston (16) présente un palier, qui en fin de course de la tige à piston (16) dans le sens de travail, interrompt le contact de l'élément d'arrêt de commande (30) avec la tige à piston (16)

20. Applicateur correspondant à l'une des revendications ci-dessus, **caractérisé par le fait que** la tige à piston (16) au moins dans la zone de l'élément d'arrêt de commande (30), présente un micro-engrenage.
